# EUROPÄISCHE PATENTSCHRIFT

(11) **EP 3 667 265 B1**
(45) Veröffentlichungstag und Bekanntmachung des Hinweises auf die Patenterteilung: **15.06.2022**
(21) Anmeldenummer: 18212495.8
(22) Anmeldetag: 14.12.2018
(51) Int. Cl.: G01G 23/01, G01G 7/02

(54) **KALIBRIERGEWICHTSANORDNUNG FÜR EIN GRAVIMETRISCHES MESSGERÄT**
CALIBRATION WEIGHT ASSEMBLY FOR A GRAVIMETRIC MEASUREMENT DEVICE
DISPOSITIF D'ÉTALONNAGE DE POIDS POUR UN APPAREIL DE MESURE GRAVIMÉTRIQUE

(43) Veröffentlichungstag der Anmeldung: 17.06.2020
(73) Patentinhaber: Mettler-Toledo GmbH, 8606 Greifensee (CH)
(72) Erfinder: Burkhard, Hans-Rudolf, 8492 Wila (CH); Koller, David, 8004 Zürich (CH); Metzger, Andreas, 8708 Männedorf (CH); Fankhauser, George, 8703 Erlenbach (CH)
(74) Vertreter: Mettler-Toledo

(56) Entgegenhaltungen:
- EP-A1- 1 752 746
- EP-A1- 2 336 736
- DE-B3-102009 009 204

## Beschreibung

### Technisches Gebiet

Die Erfindung betrifft eine Kalibriergewichtsanordnung für ein gravimetrisches Messgerät, insbesondere einer Waage, sowie ein Verfahren zum Betreiben einer Kalibriergewichtsanordnung.

Bei Kraftmessvorrichtungen, zum Beispiel bei Wägezellen, welche nach dem Prinzip der elektromagnetischen Kraftkompensation arbeiten, im Englischen bekannt unter Electro-Magnetic Force Restauration oder abgekürzt EMFR-Wägezellen genannt, wird die Gewichtskraft des Wägeguts entweder direkt oder über einen oder mehrere, auf Lagern gelagerte(n) Kraftübertragungshebel zu einem elektromechanischen Messaufnehmer übertragen. Der Messaufnehmer erzeugt eine der Gewichtskraft des Wägeguts entsprechende Kompensationskraft und stellt dabei ein elektrisches Signal zur Verfügung, welches durch eine Wägeelektronik, der Verarbeitungseinheit, weiterverarbeitet und zur Anzeige gebracht wird.

Eine EMFR-Wägezelle weist meist ein Parallelogramm auf mit einem feststehenden Bereich oder Parallelschenkel und einen mit diesem durch zwei Parallelführungen verbundenen beweglichen Parallelschenkel, welcher als Lastaufnahmebereich dient. In Hebelsystemen wird die Gewichtskraft über ein an den Lastaufnahmebereich gekoppeltes, längssteifes, biegeelastisches Koppelelement an einen Wägebalken übertragen, welcher am feststehenden Parallelschenkel abgestützt ist. Der Zweck einer solchen Wägezelle besteht darin, die der aufgelegten Last entsprechende Gewichtskraft soweit zu untersetzen, dass der die Kompensationskraft erzeugende Messaufnehmer ein der Gewichtskraft entsprechendes Messsignal ausgeben kann. Bekanntermassen sind die Verbindungsstellen der einzelnen Elemente in hochauflösenden Wägezellen durch Biegelager ausgestaltet. Biegelager definieren eine Drehachse zwischen den zwei gekoppelten Elementen und können bei einer einstückigen Wägezelle, auch monolithische Wägezelle oder Monoblock genannt, als dünne Materialstellen ausgestaltet sein.

In EMFR-Wägezellen bei denen die Gewichtskraft direkt, also ohne Untersetzung der Kompensationskraft mittels Hebeln, von der vom Messaufnehmer erzeugten Kompensationskraft kompensiert wird, sind die Parallelführungen meist als Federelemente bzw. Federgelenke oder Membranen ausgestaltet. Bei solchen Wägezellen, auch Direktmesssysteme genannt, wird von einem Messaufnehmer eine der Gewichtskraft der Last entsprechende gleich grosse Kompensationskraft entgegengebracht.

Üblicherweise umfasst eine Kraftmessvorrichtung eine Kraftaufnahme, eine Kraftübertragung, eine Kraftmesszelle und eine Vorrichtung zur Verarbeitung der Messsignale. Dabei wird eine zu messende Kraft mittels der Kraftaufnahme aufgenommen, über die Kraftübertragung an die Kraftmesszelle weitergeleitet, wo sie als zugeführte Kraft auf die Kraftmesszelle wirkt. Beispielsweise ergibt sich bei einem gravimetrischen Messinstrument die zu messende Kraft durch die Gewichtskraft des Wägeguts, welche auf das gravimetrische Messinstrument in Form einer Waagschale und über die Kraftübertragung in Form eines Gestänges auf die Kraftmessvorrichtung, die sogenannte Wägezelle, einwirkt.

Die Kraftmessvorrichtung ist ein mechanisch-elektrischer Wandler, welcher die zugeführte Kraft in ein elektrisches Messsignal wandelt. Dieses zur einwirkenden Kraft korrespondierende Messsignal wird an eine Verarbeitungseinheit weitergeleitet und dort verarbeitet und ausgewertet. Die Ergebnisse der Verarbeitung werden als Messwerte an eine Anzeigeeinheit oder an eine weitere Verarbeitungseinheit, beispielsweise an einen Leitrechner oder an eine Anlagensteuerung, weitergeleitet.

Um eine hohe und gleichbleibende Genauigkeit zu gewährleisten ist von Zeit zu Zeit ein Korrekturvorgang, eine sogenannte Kalibrierung, notwendig. Dabei wird der Kraftmessvorrichtung eine vorgegebene Kraft zugeführt, sodass die Kraftmessvorrichtung ein Messsignal erzeugt, welches zu der vorgegebenen Kraft korrespondiert und welches an die Verarbeitungseinheit weitergeleitet wird. Aus einem Vergleich zwischen einer vorgegebenen Kraft und den daraus ermittelten Messwerten können dann entsprechende Korrekturmassnahmen getroffen werden, beispielsweise die Anpassung der Berechnungsparameter in der Verarbeitungseinheit.

Gravimetrische Messinstrumente, z.B. elektronische Waagen, werden häufig mittels eines internen Kalibriergewichts kalibriert. Für eine Kalibrierung wird ein Kalibriergewicht mit einer definierten Masse in Kraftkontakt mit der Kraftmessvorrichtung eines gravimetrischen Messinstrumentes angeordneten gebracht und dann ein Referenzwert ermittelt. Anhand dieses Referenzwerts können weitere Wägeparameter der Waage angeglichen werden. Nach erfolgreicher Kalibrierung wird der Kontakt zwischen dem Kalibriergewicht und der Kraftmessvorrichtung wieder gelöst und das Kalibriergewicht in einer Ruheposition arretiert. Das Kalibriergewicht wird dabei durch einen Transfermechanismus aus einer Ruheposition in eine Kalibrierposition und zurückbewegt. In der Kalibrierposition steht das Kalibriergewicht in Kraftkontakt mit der Kraftmessvorrichtung, in der Ruheposition besteht kein Kraftkontakt.

Zur Erzeugung der vorgegebenen Kraft und zur Zuführung dieser Kraft an die Kraftmessvorrichtung wird oftmals eine sogenannte Kalibriervorrichtung eingesetzt. Dabei wird die Kalibriervorrichtung während eines Kalibriervorgangs an die Kraftmessvorrichtung kraftschlüssig gekoppelt und die von der Kalibriervorrichtung erzeugte Kraft auf die Kraftmessvorrichtung übertragen. Im Anschluss an den Kalibriervorgang wird die Kopplung getrennt, so dass die Kraftmessvorrichtung während des normalen Messbetriebs von der Kalibriervorrichtung getrennt ist.

### Stand der Technik

Kalibriervorrichtungen sind aus dem Stand der Technik bekannt. Beispielsweise offenbart CH 676 750 A5 eine Kalibriervorrichtung mit einem vorgegebenen Kalibiergewicht, welches durch eine Hubvorrichtung auf einen an die Kraftmessvorrichtung gekoppelten Träger abgesenkt und damit an die Kraftmessvorrichtung angekoppelt werden kann. Dabei wird zu Beginn des Kalibriervorgangs mit einem Elektromotor und einer drehbaren Spindel das Kalibriergewicht in vertikaler Richtung abgesenkt und nach dem Kalibriervorgang wieder angehoben.

Aus EP 0 955 530 A1 ist bekannt, die Kalibriervorrichtung in unmittelbarer Nähe zur Kraftmesszelle im Gehäuse einer Kraftmessvorrichtung anzuordnen, wobei ein Hebelarm eine Verlängerung aufweist, der mit einem Ankopplungsbereich für das Kalibriergewicht versehen ist. Das Kalibriergewicht wird von der Ruheposition in die Kalibrierposition und wieder zurück in die Ruheposition durch einen Hebe-Senkmechanismus befördert.

In der EP 0 468 159 B1 wird eine Kalibriergewichtsanordnung mit einem Kalibriergewicht offenbart, welches über paarweise horizontal gegeneinander verschiebbare Keile vertikal bewegt und so in Kraftkontakt mit der Kraftmessvorrichtung des gravimetrischen Messinstrumentes gebracht wird. Der Antrieb dieses Transfermechanismus erfolgt über eine mit den Keilen verbundene Spindel und einen motorischen Antrieb.

In der DE 203 18 788 U1 wird beschrieben, wie ein einstückiges Kalibriergewicht durch ein rampenartiges Hebeelement angehoben und abgesenkt wird, wobei das durch einen linearen Antrieb angetriebene Hebeelement eine Art schräge Parallelbewegung ausführt.

Angetrieben werden die erwähnten Hebeelemente im Allgemeinen durch kleine Servomotoren. Nachteilig an der Verwendung von Servomotoren ist, dass ein solcher vergleichsweise viel Platz in der Kraftmessvorrichtung des gravimetrischen Messinstrumentes benötigt, wodurch sowohl die Kraftmessvorrichtung als auch das gravimetrische Messinstrument selbst unnötig vergrössert wird.

Gerade bei hochempfindlichen elektronischen Waagen wird das Wägeergebnis durch elektrostatische Aufladung und Wechselwirkungen beeinflusst und sogar verändert. Die für den Antrieb der Transfermechanismen verwendeten Servomotoren enthalten elektrisch nichtleitende Getriebeteile, welche im Betrieb über Reibung elektrostatische Felder erzeugen. Die entstehenden elektrostatischen Felder, jedoch auch elektromagnetische Felder reichen aus, um das Wägeergebnis, insbesondere von hochempfindlichen gravimetrischen Messinstrumenten zu beeinflussen.

Aus DE 10 2009 009 204 B3 ist ein Verfahren und eine Vorrichtung zur Schweberegelung eines Schwebeteils bekannt. Weiter ist aus EP 1 752 746 A1 eine Kalibriergewichtsanordnung für eine elektronische Waage bekannt, welche ein als Kniegelenk ausgestaltetes Hebelsystem ausgestaltetes Rückstellelement aufweist. EP 2 336 736 A1 beschreibt eine Kalibriervorrichtung mit koppelbarem Kalibriergewicht.

### Kurzbeschreibung der Erfindung

Der vorliegenden Erfindung liegt daher die Aufgabe zugrunde, eine Kalibriergewichtsanordnung und ein Verfahren für das Betreiben dieser Kalibriergewichtsanordnung zur Verfügung zu stellen, welche die Nachteile des Standes der Technik überwindet.

Diese Aufgabe wird mit einer Kalibriervorrichtung gelöst, welche die in den unabhängigen Ansprüchen angegebenen Merkmale aufweist. Vorteilhafte Ausgestaltungen der Erfindung sind in den weiteren, abhängigen Ansprüchen angegeben.

Die Aufgabe wird gelöst durch eine Kalibriergewichtsanordnung für ein gravimetrisches Messgerät mit einer einen feststehenden Bereich, einen Lastaufnahmebereich und einen Messaufnehmer aufweisenden nach dem Prinzip der elektromagnetischen Kraftkompensation arbeitenden Kraftmessvorrichtung, wobei die Kalibriergewichtsanordnung mindestens ein mit dem Lastaufnahmebereich koppelbares Kalibriergewicht und einen Transfermechanismus umfasst um das mindestens eine Kalibriergewicht während einer Bewegungsphase von einer Ruheposition in eine Kalibrierposition beziehungsweise von der Kalibrierposition in die Ruheposition zu transferieren, wobei die Kalibriergewichtsanordnung derart ausgelegt ist, dass durch geeignetes Ansteuern des Messaufnehmers dieser als Antrieb des Transfermechanismus das Kalibriergewicht während der Bewegungsphase von der Ruheposition in die Kalibrierposition beziehungsweise von der Kalibrierposition in die Ruheposition transferiert.

Erfindungsgemäss weist der Transfermechanismus mindestens ein polystabiles Positionierelement auf, dessen erster stabiler Zustand die Kalibrierposition und dessen zweiter stabiler Zustand die Ruheposition des Transfermechanismus definiert, und entspricht die Kalibrierposition der Position, in die zur Bestimmung einer aufgelegten Kraft der Messaufnehmer geregelt zurückgeführt wird, insbesondere der Null-Lage.

In einer Kraftmessvorrichtung, basierend auf dem Prinzip der elektromagnetischen Kraftkompensation ist der Messaufnehmer ein zur Umwandlung der Gewichtskraft in ein elektrisches Messsignal dienender Kraftwandler, welcher meist ein am feststehenden Bereich festgelegtes Permanentmagnetsystem mit einem Luftspalt und eine im Luftspalt bewegliche und im Betrieb der Kraftmessvorrichtung von einem Kompensationsstrom durchflossene Spule aufweist. Spule und Permanentmagnetsystem können hierbei auch getauscht sein. Ein Regler, welcher im Betrieb der Kraftmessvorrichtung aufgrund eines Positionssensorsignals den Kompensationsstrom so regelt, dass die Spule und der mit ihr verbundene Lastaufnehmer durch die elektromagnetische Kraft zwischen der Spule und dem Permanentmagnetsystem in eine zur Bestimmung einer aufgelegten Kraft vorgegebene Null-Lage zurückgeführt wird. Mit andern Worten, der Regler sorgt dafür, dass die elektromagnetische Kompensationskraft mit der aufgelegten Gewichtskraft das Gleichgewicht hält, welches in der Null-Lage der Fall ist. Durch Vorgabe einer Sollposition wird der durch den Regler geregelte Kompensationsstrom durch die Spule geleitet und dabei die Spule entsprechend ausgelenkt.

Besonders vorteilhaft ist, dass durch die zusätzliche Funktion des Messaufnehmers ein gesonderter Antrieb für den Transfermechanismus entfällt.

In einer vorteilhaften Ausgestaltung der Erfindung ist der Massenschwerpunkt des Kalibriergewichts auf der Kräfteresultierenden des Messaufnehmers oder auf der Achse, welche parallel zur der Kräfteresultierenden des Messaufnehmers verläuft, angeordnet.

In einer weiteren Ausgestaltung weist das polystabile Positionierelement ferner ein Führungsstück mit einer Führungsmatrize und ein Führungsbolzen auf, wobei entweder das Führungsstück am feststehenden Bereich und der Führungsbolzen am Kalibriergewicht oder der Führungsbolzen am feststehenden Bereich und das Führungsstück am Kalibriergewicht festgelegt ist. Dabei ist es unerheblich ob das Führungsstück oder der Führungsbolzen direkt am feststehenden Bereich festgelegt ist, oder mit einem mit dem feststehenden Bereich verbundenem Teil der Kraftmessvorrichtung.

In einer weiteren vorteilhaften Ausgestaltung ist die Form und Lage der Führungsmatrize derart auf den Bewegungsablauf des Kalibriergewichts abgestimmt, dass der Führungsbolzen durch den Schwerkraftsvektor stets im Uhrzeigersinn oder im Gegenuhrzeigersinn die Führungsmatrize durchläuft.

Vorzugsweise ist das Kalibriergewicht konzentrisch und drehbar um die Kräfteresultierenden des Messaufnehmers ausgebildet, insbesondere die Form eines Rings aufweist, oder dass das Kalibriergewicht ist zylinder- oder hantelförmig ausgebildet.

In einer anderen Ausgestaltung weist das polystabile Positionierelement drei Paare aus je einem Führungsstück und einem Führungsbolzen auf, wobei die Paare konzentrisch im gleichen Abstand zu einander angeordnet sind, oder dass das polystabile Positionierelement weist zwei Paare aus je einem Führungsstück und einem Führungsbolzen auf, wobei die Paare jeweils an den Stirnflächen eines zylinder- oder hantelförmigen Kalibriergewichts angeordnet sind. Weiter kann die Tiefe der Führungsmatrize in Richtung der Schwerkraft zunehmend ausgestaltet sein. Dies hilft dabei das Kalibriergewicht beim Einfinden in die Ruheposition stets mittig d.h. zentriert zu halten.

In einer anderen vorteilhaften Ausgestaltung weist der Transfermechanismus ferner einen mit einem beweglichen Teil des Messaufnehmers verbundenen Verlängerungsaufsatz mit einer Aufnahmevorrichtung für das Kalibriergewicht auf.

In einer ersten Anwendung der oben beschriebenen Kalibriergewichtsanordnung in einer Kraftmessvorrichtung umgibt der feststehende Bereich der Kraftmessvorrichtung den Lastaufnahmebereich und die Kalibriergewichtsanordnung () ist dabei oberhalb oder unterhalb des Messaufnehmers angeordnet. Weiter kann der Verlängerungsaufsatz direkt am Lastaufnahmebereich festgelegt sein.

In einer ersten Variante einer zweiten Anwendung der oben beschriebenen Kalibriergewichtsanordnung in einer Kraftmessvorrichtung ist der Lastaufnahmebereich durch Parallellenker beweglich geführt mit dem feststehenden Bereich verbunden, wobei die Kraftmessvorrichtung ferner einen ersten Hebel mit einem mit dem Lastaufnahmebereich in kraftübertragender Weise verbundenen eingangsseitigen Hebelarm und einem ausgangsseitigen Hebelarm, welcher mit dem Messaufnehmer direkt in kraftübertragender Weise verbunden ist, aufweist. Zudem weist der feststehende Bereich oder der Lastaufnahmebereich eine Verlängerung auf, die mit einem Ankopplungsbereich für das Kalibriergewicht versehen ist.

In einer zweiten Variante der zweiten Anwendung der oben beschriebenen Kalibriergewichtsanordnung in einer Kraftmessvorrichtung ist der ausgangsseitige Hebelarm mit dem Messaufnehmer indirekt über mindestens einen zweiten Hebel in kraftübertragender Weise verbunden. In dieser zweiten Variante weist der eingangsseitige Hebelarm des ersten Hebels die Verlängerung auf, die sich hierbei in den an die dem feststehenden Bereich abgewandte Seite des Lastaufnahmebereichs angrenzenden Raum hinein erstreckt und dort mit einem Ankopplungsbereich für das Kalibriergewicht versehen ist, und wobei auch der Messaufnehmer im an die dem feststehenden Bereich abgewandte Seite des Lastaufnahmebereichs angrenzenden Raum angeordnet ist.

In einem Verfahren zum Betreiben einer Kalibriergewichtsanordnung, wobei die Kraftmessvorrichtung einen Messaufnehmer mit einem Permanentmagnetsystem, mit einem Luftspalt, und mit einer im Luftspalt beweglichen und im Betrieb der Kraftmessvorrichtung von einem Kompensationsstrom durchflossenen Spule, zur Ausgabe eines Messsignals aufweist, wobei das Verfahren mindestens die folgenden Schritte umfasst: Bereitstellen des Kalibriergewichts in einer Ruheposition; Ändern des Kompensationsstromes derart, dass die Spule in Richtung der Ruheposition des Kalibriergewichts ausgelenkt wird, und daraufhin das Kalibriergewicht kontaktiert; Ansteuern des Kompensationsstromes derart, dass die Spule weiter ausgelenkt wird, so dass das Kalibriergewicht aus der Ruheposition in eine Kalibrierposition beziehungsweise von der Kalibrierposition in die Ruheposition überführt wird; Ändern des Kompensationsstromes derart, dass die Aufnahmevorrichtung nach Erreichen der Ruheposition des Kalibriergewichts sich von diesem entfernt.

In einem weiteren Verfahren weist die Kraftmessvorrichtung einen Regler auf, welcher im Betrieb des gravimetrisches Messgeräts aufgrund eines Positionssensorsignals den Kompensationsstrom so regelt, dass die Spule durch die elektromagnetische Kraft zwischen der Spule und dem Permanentmagnetsystem in eine zur Bestimmung einer aufgelegten Kraft vorgegebene Null-Lage zurückgeführt wird. Das Verfahren umfasst ferner die folgenden Schritte: Aufzeichnen des Positionssensorsignals in Abhängigkeit mit dem angesteuerten Kompensationsstrom; Vergleichen der aufgezeichneten Abhängigkeit mit einem in einem Speicher abgelegten Referenzabhängigkeit und Ausgabe eines Transferalarms, der die Überschreitung eines Toleranzwertes zwischen der aufgezeichneten Abhängigkeit und dem Referenzabhängigkeit darstellt; und bei Ausgabe eines Transferalarms, Anwenden eines Algorithmus, der mindestens eine der Bewegungsphase entgegengesetzte Änderung des Kompensationsstromes beinhaltet. Dieser Algorithmus dient dazu ein Verklemmen des polystabilen Positionierelementes zu verhindern oder zu lösen.

Um die Kraftmessvorrichtung und deren Elemente oder Komponenten zu schützen, kann ein mechanischer Anschlag vorgesehen sein, der die Auslenkung begrenzt. Im Falle eines Kalibriervorgangs kann dieser dann als vorgelagerter Schritt automatisiert aufgehoben werden, um die volle Auslenkungsmöglichkeit der Spule zu nutzen. Nach Abschluss des Kalibriervorgangs wird der mechanische Anschlag für den Wägemodus wieder erstellt.

In einem weiteren vorteilhaften Verfahren entspricht die Kalibrierposition der Position, in die zur Bestimmung einer aufgelegten Kraft der Messaufnehmer geregelt zurückgeführt wird, insbesondere der Null-Lage.

Einzelheiten der erfindungsgemässen Kraftmessvorrichtung, des erfindungsgemässen Kraftmessmoduls und des erfindungsgemässen Verfahrens ergeben sich anhand der Beschreibung der in den Zeichnungen dargestellten Ausführungsbeispiele. Es zeigen:
- Fig. 1: Eine schematische Darstellung einer Kraftmessvorrichtung mit Hebelsystem und einer ersten Variante einer ersten Kalibriergewichtsanordnung;
- Fig. 2: eine schematische Darstellung einer Kraftmessvorrichtung mit Hebelsystem und einer zweiten Variante der ersten Kalibriergewichtsanordnung;
- Fig. 3: eine schematische Darstellung einer Kraftmessvorrichtung mit Hebelsystem und einer ersten Variante einer zweiten Kalibriergewichtsanordnung;

- Fig. 4: eine schematische Darstellung einer Kraftmessvorrichtung mit Hebelsystem und einer zweiten Variante der zweiten Kalibriergewichtsanordnung;
- Fig. 5: Eine vereinfachte Darstellung eines Direktmesssystems mit einer Kalibriergewichtsanordnung in schematischer Darstellung in der Ruheposition;
- Fig. 6a-6f: Eine schematische Darstellung des Bewegungsablaufes der Kalibriergewichtsanordnung aus Fig. 5 in sechs Schritten;
- Fig. 7a: eine vereinfachte Darstellung einer Kalibriergewichtsanordnung in der Aufsicht;
- Fig. 7b: die Kalibriergewichtsanordnung aus Fig. 7a in einer isometrischen Ansicht;
- Fig. 8: einen Verlängerungsaufsatz mit Aufnahmevorrichtung für das Kalibriergewicht;
- Fig. 9a: die Kalibriergewichtsanordnung aus Fig. 7a in einer Schnittansicht mit dem Kalibriergewicht in der Kalibrierposition; und
- Fig. 9b: die Kalibriergewichtsanordnung aus Fig. 9a mit dem Kalibriergewicht in der Ruheposition;

### Kurze Beschreibung der Zeichnungsfiguren

Merkmale mit gleicher Funktion und ähnlicher Ausgestaltung sind in der folgenden Beschreibung mit denselben Bezugszeichen versehen.

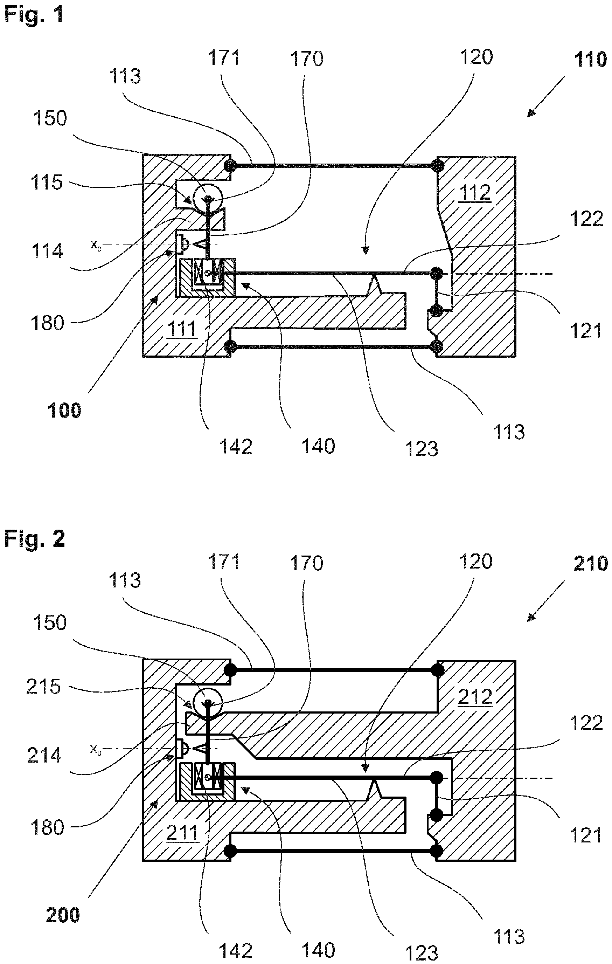

Figur 1 zeigt eine schematische Darstellung einer Kraftmessvorrichtung 110 in Längsrichtung mit einer Kalibriergewichtsanordnung 100. Die Kraftmessvorrichtung 110 besteht aus einem feststehendem Bereich 111, einem Lastaufnahmebereich 112 und einem oberen sowie einem unteren Parallellenker 113. Mittels eines Kraftübertragungselements 121 ist ein erster Hebel 120 auf dessen eingangsseitigem Hebelarm 122 mit dem Lastaufnahmebereich 112 verbunden. Der ausgangsseitige Hebelarm 123 des ersten Hebels 120 ist mit dem Messaufnehmer 140 verbunden. Ein Positionssensor 180 erfasst die Auslenkung des Messaufnehmers 140 von einer Null-Lage xo in welcher das Messsignal des Messaufnehmers 140 dem aufgelegten Gewicht auf den Lastaufnehmer 112 entspricht. Der feststehende Bereich 111 hat einem Ausleger 114, welcher mit einem Ankopplungsbereich 115 für das Kalibriergewicht 150 in der Ruheposition RP versehen ist. Mit dem beweglichen Teil des Messaufnehmers 140 verbunden, hier mit der Spule 144, ist ein Verlängerungsaufsatz (170) mit einer Aufnahmevorrichtung 171.

Der in Figur 1 vereinfacht dargestellte Messaufnehmer 140 besteht meist aus einem hier mit dem feststehendem Bereich 111 verbundenen Permanentmagnetsystem 141 und einer Spule 144, welche von diesem Permanentmagnetsystem 141 umgeben ist. Wird die Spule 144 genügend stark ausgelenkt, hier in Figur 1 nach oben, wird die Aufnahmevorrichtung 171 mit dem Kalibriergewicht 150 in Kontakt gebracht.

Die schematische Darstellung der Kraftmessvorrichtung 210 in Figur 2 entspricht grösstenteils derjenigen auf Figur 1, mit dem Unterschied, dass der Lastaufnehmer 212 einen Ausleger 214 aufweist welcher mit einem Ankopplungsbereich 215 für das Kalibriergewicht 150 in der Ruheposition RP versehen ist. Auch hier wird das Kalibriergewicht 150 in Kontakt mit der Aufnahmevorrichtung 171 gebracht, sobald die Spule 144 genügend stark ausgelenkt wurde.

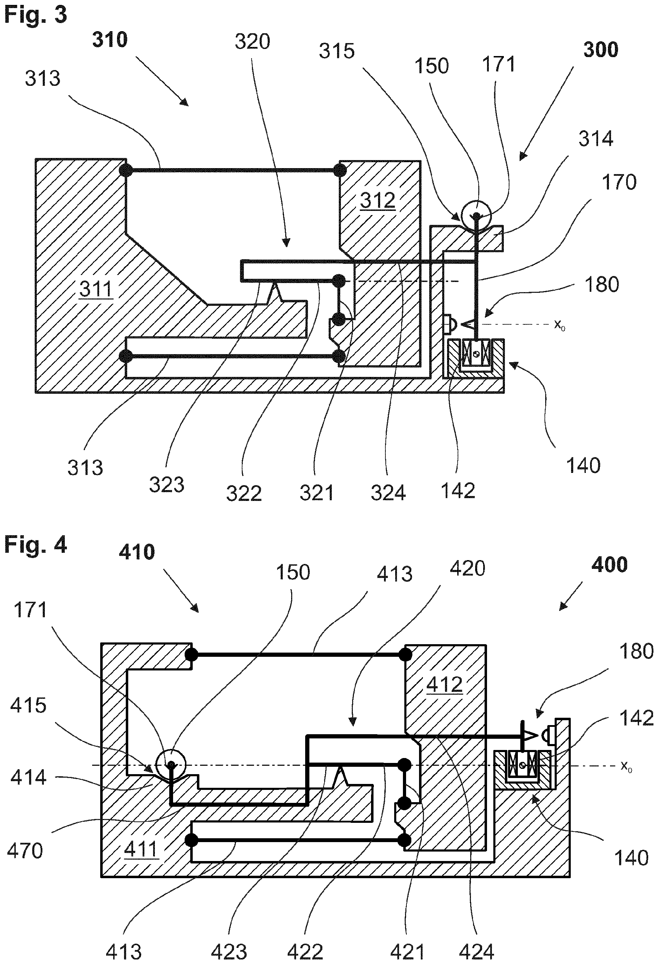

In Figur 3, einer weiteren schematischen Darstellung einer Kraftmessvorrichtung 310 mit einer Kalibriergewichtsanordnung 300, erstreckt sich der Ausleger 314 in den an die dem feststehenden Bereich 311 abgewandte Seite des Lastaufnahmebereichs 312 angrenzenden Raum. Der Ausleger 314 weist zur Ankopplung des Kalibriergewichts 150 in der Ruheposition RP einen Ankopplungsbereich 315 auf. Ebenso der eingangsseitige Hebelarm 322 des ersten Hebels 320, der eine Verlängerung 324 aufweist, erstreckt sich in diesen Raum hinein, ist dort mit dem Verlängerungsaufsatz 170 verbunden und mit einer Aufnahmevorrichtung 171 für das Kalibriergewicht 150 versehen. Der Messaufnehmer 140 befindet sich ebenfalls auf der zum feststehenden Bereich 311 abgewandten Seite des Lastaufnehmers 312.

Figur 4 zeigt eine weitere Darstellung einer Kraftmessvorrichtung 410 mit einer Kalibriergewichtsanordnung 400. Das Kalibriergewicht 150 muss nicht zwingend direkt über dem Messaufnehmer 180 angeordnet sein. Wie in Figur 3 befindet sich der Messaufnehmer 140 auf der zum feststehenden Bereich 411 abgewandten Seite des Lastaufnehmers 412. Zur Ankopplung des Kalibriergewichts 150 in der Ruheposition RP weist der feststehende Bereich 411 einen Ankopplungsbereich 415 auf. Der Ausleger wie er in den Figuren 1 bis 3 gezeigt ist, ist in Figur 4 Teil des feststehenden Bereichs 411, beziehungsweise ist der Ausleger 414 in den feststehenden Bereich 411 integriert. In dieser Kraftmessvorrichtung 410 weist der erste Hebel 420 eine Verlängerung 424 auf, welcher mit dem Messaufnehmer 140 und dem Positionssensor 180 verbunden ist. In entgegengesetzter Richtung ist der zweite Hebelarm 423 mit einem Verlängerungsaufsatz 470 mit einer Aufnahmevorrichtung 171 für das Kalibriergewicht 150 verbunden.

In den Figuren 1 bis 4 sind Kraftmessvorrichtungen als Einhebelsysteme gezeigt. Natürlich können die Kraftmessvorrichtungen 110, 210, 310, 410 auch als Mehrhebelsystem ausgestaltet sein. Generell ist es vorteilhaft, den Massenschwerpunkt eines Bauteils am ersten Hebel 120, 320, 420, wie zum Beispiel den der Spule 144, der Blendenfahne des Positionssensors 180, des in der Aufnahmevorrichtung 171 aufliegenden Kalibriergewichts 150, oder auch den der jeweiligen Hebelarme 122, 322, 422, 123, 323, 423, auf derselben waagrechten Ebene anzuordnen, die durch den Drehpunkt des ersten Hebels 120, 320, 420 verläuft. Diese Anordnung der Massenschwerpunkte macht eine Kraftmessvorrichtung Niveau unempfindlicher. Um die Kraftmessvorrichtung unempfindlicher gegen Fehler bei exzentrischer Gewichtsauflage zu machen, müssen die Massenschwerpunkte auf oder nahe derselben vertikalen Ebene angeordnet werden, die in Längsrichtung symmetrisch durch die Kraftmessvorrichtung verläuft. Die Distanz zwischen der Aufnahmevorrichtung 171 und dem Drehpunkt des ersten Hebels 120, 320, 420 kann minimal so gross gewählt werden, so dass der Führungsbolzen auch durch die Führungsmatrize geführt werden kann. In Richtung maximaler Distanz sind die zu berücksichtigenden zusammenhängenden Faktoren die Masse des Kalibriergewichts und die erbringbare elektromagnetische Kraft des Messumformers.

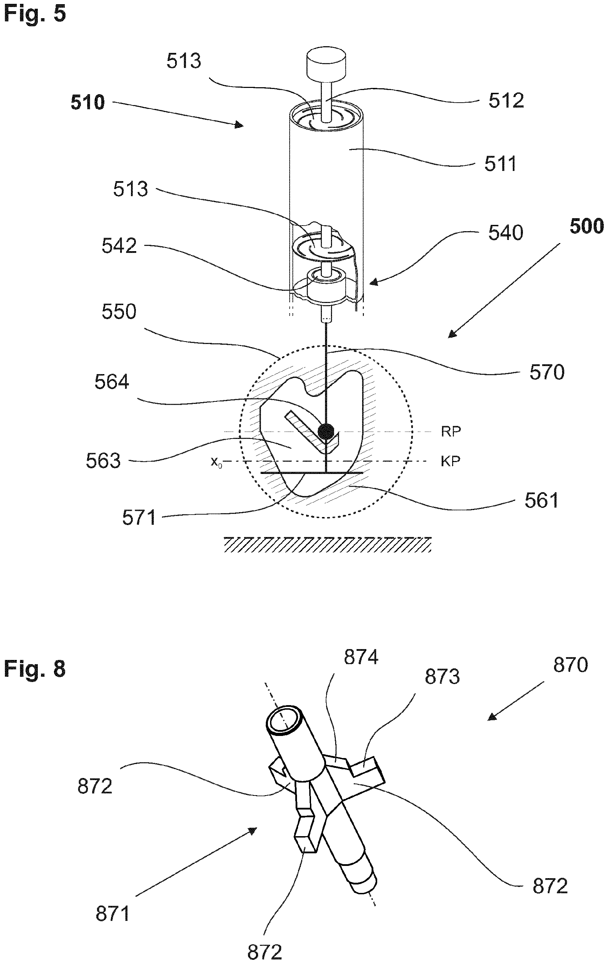

Eine Kraftmessvorrichtung 510 mit einer Kalibriergewichtsanordnung 500 wobei die Kraftmessvorrichtung 510 als Direktmesssystem ausgebildet ist, ist in Figur 5 gezeigt. Die Kraftmessvorrichtung 510 besteht ebenso aus einem feststehendem Bereich 511, einem Lastaufnahmebereich 512 und einem oberen sowie einem unteren Parallellenker 513. Der Messaufnehmer 540 ist direkt mit dem Lastaufnehmer 512 verbunden und ein Positionssensor (nicht gezeigt) erfasst die Auslenkung des Messaufnehmers 540 von einer in welcher das Messsignal des Messaufnehmers 540 dem aufgelegten Gewicht auf den Lastaufnehmer 512 entspricht. Mit dem beweglichen Teil des Messaufnehmers 540 verbunden, hier mit der Spule 544, ist ein Verlängerungsaufsatz 570 mit einer Aufnahmevorrichtung 571. Wird die Spule 544 genügend stark ausgelenkt, hier in Figur 5 nach oben, wird die Aufnahmevorrichtung 571 mit dem Kalibriergewicht 550 in Kontakt gebracht.

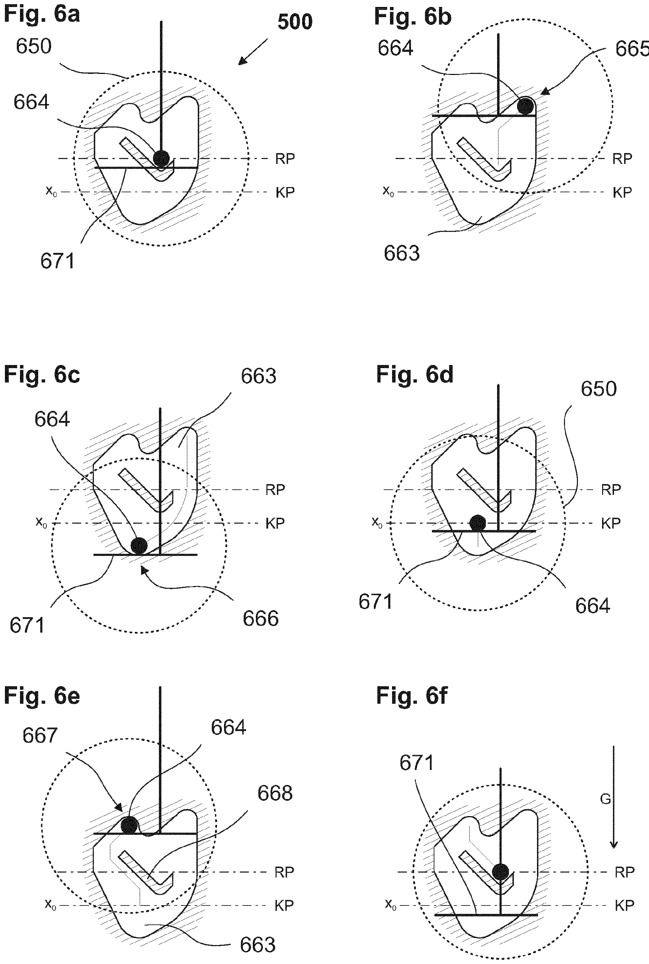

Im unteren Bereich der Figur 5 ist die Situation in der sich das Kalibriergewicht 550 in der Ruheposition RP und die Kraftmessvorrichtung 510 in der Null-Lage xo befindet abgebildet. Anhand den weiteren Figuren 6a bis 6f soll der Bewegungsablauf des Transfermechanismus veranschaulicht werden, welcher das Kalibriergewicht 550 von der Ruheposition RP in die Kalibrierposition KP transferiert und wieder zurück. Der Transfermechanismus weist ein polystabiles Positionierelement auf, welches ein Führungsstück 561 mit einer Führungsmatrize 563 und einen Führungsbolzen 564 aufweist, wobei hier das Führungsstück 561, durch den schraffierten Hintergrund dargestellt, am feststehenden Bereich 511 und der Führungsbolzen 564 am Kalibriergewicht 550 festgelegt ist.

In den folgenden Figuren 6a bis 6f wird der Bewegungsablauf beschrieben, wobei eine feine Linie den zurückgelegten Weg seit der vorangehenden Figur repräsentiert. Wird die Spule 544, siehe Figur 5, genügend stark nach oben ausgelenkt, wird die Aufnahmevorrichtung 671 mit dem am Kalibriergewicht 650 festgelegten Führungsbolzen 564 in Kontakt gebracht. Die weitere Auslenkung der Spule hebt den Führungsbolzen 564 und somit das Kalibriergewicht 650 aus der Ruheposition RP. Durch die Führungsmatrize 663 geführt verschiebt sich, wie in Figur 6b gezeigt, der Führungsbolzen 664 in einen in der rechten oberen Ecke der Führungsmatrize 663 befindlichen ersten Umkehrpunkt 665. Beim anschliessenden Absenken der Aufnahmevorrichtung 671 - aus Figur 6c ersichtlich - wird der Führungsbolzen 664 durch die Führungsmatrize 663 zu einem zweiten Umkehrpunkt 666 geführt, der sich unten in etwa in der Mitte der Führungsmatrize 663 befindet. Daraufhin wird die Aufnahmevorrichtung 671 wiederum nach oben ausgelenkt um zur Kalibrierposition KP zu gelangen.

Wie aus Figur 6d zu erkennen ist, entspricht die Kalibrierposition KP der Null-Lage xo wie diese schon in Figur 5 von der Kraftmessvorrichtung 510 eingenommen wird. Eine Kalibrierung in der Null-Lage xo hat den Vorteil, dass in derselben Position kalibriert wird wie auch eine Gewichtsmessung erfolgt, oder anders gesagt, dann die Rückstellkräfte der Biegelager denjenigen Rückstellkräften während der Gewichtsbestimmung entsprechen.

Nach erfolgter Kalibrierung wird der Bewegungsablauf fortgesetzt um das Kalibriergewicht 650 wieder in die Ruheposition RP zu überführen. Die Aufnahmevorrichtung 671 hebt das Kalibriergewicht 650 nach oben um den Führungsbolzen 664 in einen dritten Umkehrpunkt 667 zu führen. Auf dem Weg dorthin - siehe Figur 6e - wird der Führungsbolzen 664 durch das sich in der Mitte der Führungsmatrize 663 befindliche Inselelement 668 nach links abgelenkt, um später von der Führungsmatrize 663 geführt zum dritten Umkehrpunkt 667 zu gelangen. Beim anschliessenden Absenken der Aufnahmevorrichtung 671 - aus Figur 6f ersichtlich - wird der Führungsbolzen 664 durch die Führungsmatrize 663 zurück auf die Ruheposition geführt. Daraufhin wird die Aufnahmevorrichtung 671 weiter nach unten ausgelenkt um die Kraftmessvorrichtung 510 in die Null-Lage xo zur Ausübung einer Gewichtsbestimmung zu bringen.

Die Form und Lage der Führungsmatrize 664 ist derart auf den Bewegungsablauf des Kalibriergewichts 650 abgestimmt ist, dass der Führungsbolzen 664 durch den Schwerkraftsvektor G (repräsentativ für die Figuren 6a bis 6e nur in Figur 6f gezeigt) stets im Uhrzeigersinn die Führungsmatrize 663 durchläuft.

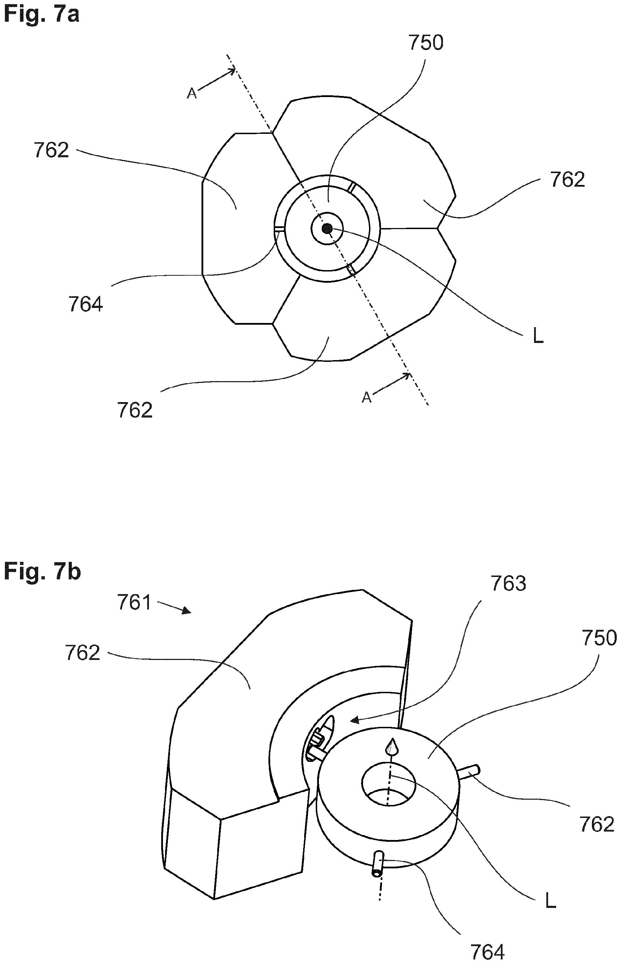

Figur 7a zeigt eine erste Darstellung einer Kalibriergewichtsanordnung 700 in der Aufsicht. Das konzentrisch ausgebildete Kalibriergewicht 750 weist die Form eines Rings auf, wobei dieses um eine Achse L im Zentrum des Ringes drehbar ist. In angebautem Zustand mit der Kraftmessvorrichtung (Figuren 1 bis 4) ist diese Achse L parallel zur Kräfteresultierenden des Messaufnehmers 140, 240, 340, 440 oder fällt mit der Kräfteresultierenden des Messaufnehmers 540 zusammen, wie in Figur 5 gezeigt. Drei Führungsstücke 762 sind mit dem feststehenden Bereich der Kraftmessvorrichtung verbunden und bilden in deren Mitte einen Raum für das Kalibriergewicht 750.

In Figur 7b ist ein Teil einer Kalibriergewichtsanordnung in einer isometrischen Ansicht gezeigt, wobei zwei der drei Führungsstücke 762 ausgeblendet wurden. Das polystabile Positionierelement 761 ist an jedem der drei Führungsstücke 762 aus je einem Paar aus Führungsmatrize 763 und Führungsbolzen 764 ausgebildet, wobei die Paare konzentrisch im gleichen Abstand zu einander angeordnet sind. An der zum gebildeten Raum in der Mitte weisenden Fläche der Führungsstücke 762 ist jeweils die Führungsmatrize 763 angeordnet, in welcher der Führungsbolzen 764 geführt wird. Beim oben geschilderten Bewegungsablauf dreht sich das Kalibriergewicht 750 um die Achse L leicht in Uhrzeigersinn und gegen den Uhrzeigersinn während der Führungsbolzen 764 der Führungsmatrize 763 folgt.

In Figur 8 ist ein Verlängerungsaufsatz 870 mit der Aufnahmevorrichtung 871 für das Kalibriergewicht (nicht gezeigt) dargestellt, welcher im Zentrum des als Ring ausgebildeten Kalibriergewichts angeordnet wird. Die Aufnahmevorrichtung 871 besteht aus drei Vorsprüngen 872, die jeweils im gleichen Abstand zueinander um den Schaft des Verlängerungsaufsatzes 870 verteilt festgelegt sind. Jeder Vorsprung 872 besitzt eine zur Mittelachse senkrecht ausgerichtete Auflagefläche 873 und eine schräg von der Mittelachse zur Auflagefläche 873 verlaufende Zentrierfläche 874. Das Kalibriergewicht liegt deshalb auf der Aufnahmevorrichtung 871 auf, respektive ist deshalb nicht fest mit dem Verlängerungsaufsatz 870 verbunden, damit das Kalibriergewicht sich relativ zum Verlängerungsaufsatz 870 bewegen kann. Die Zentrierfläche 874 hilft dabei das Kalibriergewicht stets mittig auf der Aufnahmevorrichtung 871 zu halten.

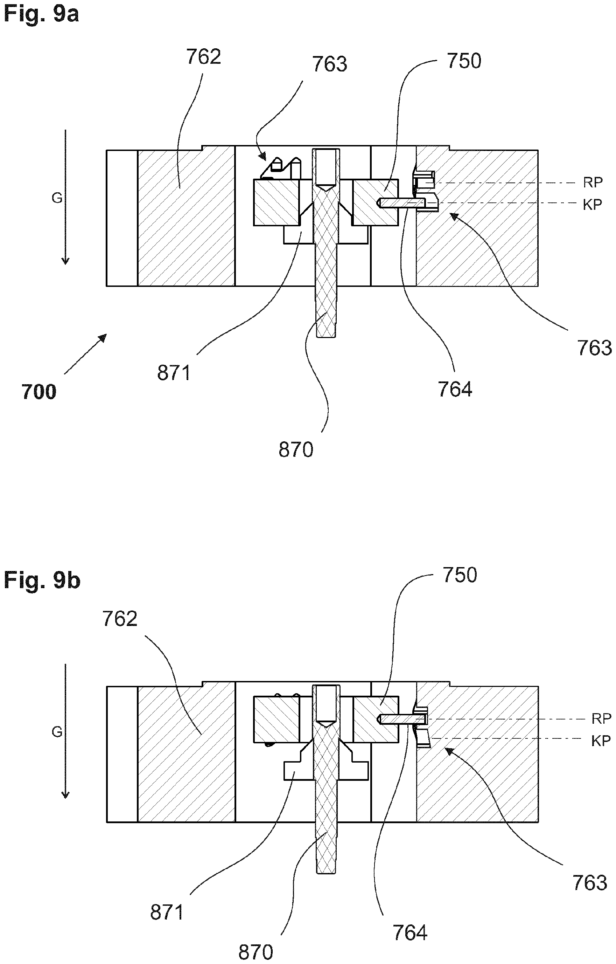

In den Figuren 9a und 9b ist die Kalibriergewichtsanordnung aus Figur 7a im Schnitt A - A gezeigt. In Figur 9a liegt das Kalibriergewicht 750 auf in der Mitte auf der Aufnahmevorrichtung 871 des Verlängerungsaufsatzes 870 auf, das Kalibriergewicht 750 befindet sich also in der Kalibrierposition KP. Die gezeigte Situation in Figur 9a entspricht derjenigen wie in Figur 6a gezeigt. Zur rechten Seite des Kalibriergewichts 750 ist einer der drei Führungsbolzen 764 sichtbar und mit dem Kalibriergewicht 750 verbunden. Der Führungsbolzen 764 ragt in die Führungsmatrize 763 des Führungsstückes 762 hinein.

In Figur 9b liegt das Kalibriergewicht 750, gehalten über den Führungsbolzen 764, in der Führungsmatrize 763 auf, das Kalibriergewicht 750 befindet sich also in der Ruheposition RP. Die Aufnahmevorrichtung 871 des Verlängerungsaufsatzes 870 ist vom Kalibriergewicht 750 entfernt, das heisst nicht in Kontakt mit diesem. Die gezeigte Situation in Figur 9b entspricht derjenigen wie in Figur 6f gezeigt. Weiter ist in Figur 9b - im Unterschied zu Figur 9a - die Tiefe T der Führungsmatrize in Richtung des Schwerkraftvektors G zunehmend dargestellt. Dies hilft dabei das Kalibriergewicht 750 beim Einfinden in die Ruheposition RP stets mittig zu halten. Dies alleine kann genügen um das Kalibriergewicht 750 zu zentrieren. Zentrierflächen 874 (Figur 8) auf der Aufnahmevorrichtung 871 sind zusätzlich möglich, es können beide Zentrierungen an der Kalibriergewichtsanordnung verwirklicht werden, oder auch nur eine der Beiden.

Die hier beschriebene Erfindung beschränkt sich nicht auf Kraftmessvorrichtungen mit nur einem Messaufnehmer. Ebenso sind auch Mehrspulensysteme vom Umfang betroffen, wie sie zum Beispiel in EP 2 993 449 A gezeigt sind. Der erfinderische Gedanke kann ohne weiteres auf solche Systeme übertragen werden, da der Fachmann versteht, dass dazu der Verlängerungsaufsatz angepasst werden muss, so dass er mit allen Messaufnehmern verbunden ist und parallel zur Kräfteresultierenden des Messaufnehmers ausgelenkt wird.

### Liste der Bezugszeichen

- 100, 200, 300, 400, 500: Kalibriergewichtsanordnung
- 110, 210, 310, 410, 510: Kraftmessvorrichtung
- 111, 211, 311, 411, 511: feststehender Bereich
- 112, 212, 312, 412, 512: Lastaufnahmebereich
- 113, 213, 313, 413, 513: Parallellenker
- 114,214,314,414: Ausleger
- 115, 215, 315, 415: Ankopplungsbereich
- 120, 320, 420: erster Hebel
- 121, 321, 421: Kraftübertragungselement
- 122, 322, 422: eingangsseitiger Hebelarm
- 123, 323, 423: ausgangsseitiger Hebelarm
- 324,424: Verlängerung
- 140, 540,: Messaufnehmer
- 141: Permanentmagnetsystem
- 142, 542: Spule
- 150, 550, 750: Kalibriergewicht
- 561, 761: polystabiles Positionierelement
- 762: Führungsstück
- 563, 663, 763: Führungsmatrize
- 564, 664, 764: Führungsbolzen
- 665: Erster Umkehrpunkt
- 666: Zweiter Umkehrpunkt
- 667: Dritter Umkehrpunkt
- 668: Inselelement
- 170, 470, 570, 870: Verlängerungsaufsatz
- 171, 571, 671, 871: Aufnahmevorrichtung
- 872: Vorsprung
- 873: Auflagefläche
- 874: Zentrierfläche
- 180: Positionssensor
- RP: Ruheposition
- KP: Kalibrierposition
- L: Parallele Achse zur Kräfteresultierenden des Messaufnehmers
- G: Schwerkraftsvektor
- T: Tiefe der Führungsmatrize
- xo: Null-Lage

## Patentansprüche

1. Kalibriergewichtsanordnung (100, 200, 300, 400, 500) für ein gravimetrisches Messgerät mit einer
einen feststehenden Bereich (111, 211, 311, 411, 511),
einen Lastaufnahmebereich (112, 212, 312, 412, 512) und
einen Messaufnehmer (140, 540)
aufweisenden nach dem Prinzip der elektromagnetischen Kraftkompensation arbeitenden Kraftmessvorrichtung (110, 210, 310, 410, 510), wobei die Kalibriergewichtsanordnung (100, 200, 300, 400, 500) mindestens
ein mit dem Lastaufnahmebereich (112, 212, 312, 412, 512) koppelbares Kalibriergewicht (150, 550, 750) und
einen Transfermechanismus umfasst um das mindestens eine Kalibriergewicht (150, 550, 750) während einer Bewegungsphase von einer Ruheposition (RP) in eine Kalibrierposition (KP) beziehungsweise von der Kalibrierposition (KP) in die Ruheposition (RP) zu transferieren,
wobei die Kalibriergewichtsanordnung (100, 200, 300, 400, 500) derart ausgelegt ist, dass durch geeignetes Ansteuern des Messaufnehmers (140, 540) dieser als Antrieb des Transfermechanismus das Kalibriergewicht (150, 550, 750) von der Ruheposition (RP) in die Kalibrierposition (KP) beziehungsweise von der Kalibrierposition (KP) in die Ruheposition (RP) transferiert,
**dadurch gekennzeichnet, dass**
wobei der Transfermechanismus mindestens ein polystabiles Positionierelement (561, 571) aufweist, dessen erster stabiler Zustand die Kalibrierposition (KP) und dessen zweiter stabiler Zustand die Ruheposition (RP) des Transfermechanismus definiert, und
dass die Kalibrierposition (KP) der Position entspricht, in die zur Bestimmung einer aufgelegten Kraft der Messaufnehmer (140, 540) geregelt zurückgeführt wird, insbesondere der Null-Lage (x0) entspricht.

2. Kalibriergewichtsanordnung nach Anspruch 1, **dadurch gekennzeichnet, dass** der Massenschwerpunkt des Kalibriergewichts (150, 550, 750) auf der Kräfteresultierenden des Messaufnehmers (140, 540) oder auf einer Achse (L), welche parallel zur Kräfteresultierenden des Messaufnehmers (140, 540) verläuft, angeordnet ist.

3. Kalibriergewichtsanordnung nach Anspruch 1 oder 2, **dadurch gekennzeichnet, dass** das polystabile Positionierelement (561, 761) ferner ein Führungsstück (762) mit einer Führungsmatrize (563, 663, 763) und einen Führungsbolzen (564, 664, 764) aufweist, wobei entweder das Führungsstück (762) am feststehenden Bereich (111, 211, 311, 411, 511) und der Führungsbolzen (564, 664, 764) am Kalibriergewicht (150, 550, 750) oder der Führungsbolzen (564, 664, 764) am feststehenden Bereich (111, 211, 311, 411, 511) und das Führungsstück (762) am Kalibriergewicht (150, 550, 750) festgelegt ist.

4. Kalibriergewichtsanordnung nach Anspruch 3, **dadurch gekennzeichnet, dass** die Form und Lage der Führungsmatrize (563, 663, 763) derart auf den Bewegungsablauf des Kalibriergewichts (150, 550, 750) abgestimmt ist, dass der Führungsbolzen (564, 664, 764) durch den Schwerkraftsvektor (G) stets im Uhrzeigersinn oder im Gegenuhrzeigersinn die Führungsmatrize (563, 663, 763) durchläuft.

5. Kalibriergewichtsanordnung nach einem der Ansprüche 1 bis 4, **dadurch gekennzeichnet, dass** das Kalibriergewicht (550, 750) konzentrisch und drehbar um die Kräfteresultierende des Messaufnehmers (540) ausgebildet ist, insbesondere die Form eines Rings aufweist, oder dass das Kalibriergewicht (140) zylinder- oder hantelförmig ausgebildet ist.

6. Kalibriergewichtsanordnung nach einem der Ansprüche 1 bis 5, **dadurch gekennzeichnet, dass** das polystabile Positionierelement (561, 761) drei Paare aus je einem Führungsstück (762) und einem Führungsbolzen (564, 664, 764) aufweist, wobei die Paare konzentrisch im gleichen Abstand zu einander angeordnet sind, oder dass
das polystabile Positionierelement zwei Paare aus je einem Führungsstück und einem Führungsbolzen aufweist, wobei die Paare jeweils an den Stirnflächen eines zylinder- oder hantelförmigen Kalibriergewichts (140) angeordnet sind.

7. Kalibriergewichtsanordnung nach Anspruch 6, **dadurch gekennzeichnet, dass** die Tiefe (T) der Führungsmatrize (763) in Richtung des Schwerkraftvektors (G) zunimmt.

8. Kalibriergewichtsanordnung nach einem der Ansprüche 1 bis 7, **dadurch gekennzeichnet, dass** der Transfermechanismus ferner einen mit einem beweglichen Teil des Messaufnehmers (140, 540) verbundenen Verlängerungsaufsatz (170, 470, 570, 870) mit einer Aufnahmevorrichtung (171, 571, 671, 871) für das Kalibriergewicht (150, 550) aufweist.

9. Kraftmessvorrichtung (510) mit einer Kalibriergewichtsanordnung (500) nach einem der vorangehenden Ansprüchen, wobei der feststehende Bereich (511) der Kraftmessvorrichtung (510) den Lastaufnahmebereich (512) umgibt und die Kalibriergewichtsanordnung (500) oberhalb oder unterhalb des Messaufnehmers (540) angeordnet ist.

10. Kraftmessvorrichtung nach Anspruch 8 oder nach Anspruch 9 wenn vom Anspruch 8 abhängig, **dadurch gekennzeichnet, dass**
das der Verlängerungsaufsatz (570, 870) direkt am Lastaufnahmebereich (511) festgelegt ist.

11. Kraftmessvorrichtung (110, 210, 310, 410) mit einer Kalibriergewichtsanordnung (100, 200, 300, 400) nach einem der Ansprüche 1 bis 8,
wobei der Lastaufnahmebereich (112, 212, 312, 412) durch Parallellenker (113, 213, 313, 413) beweglich geführt mit dem feststehenden Bereich (111, 211, 311, 411 verbunden ist, wobei die Kraftmessvorrichtung (110, 210, 310, 410) ferner
einen ersten Hebel (120, 320, 420) mit
einem mit dem Lastaufnahmebereich (112, 212, 312, 412) in kraftübertragender Weise verbundenen eingangsseitigen Hebelarm (122, 322, 422) und
einem ausgangsseitigen Hebelarm (123, 323, 423), welcher mit dem Messaufnehmer (140) direkt, oder indirekt über mindestens einen zweiten Hebel, in kraftübertragender Weise verbunden ist, aufweist, und
wobei der feststehende Bereich (111, 211, 311, 411) oder der Lastaufnahmebereich (112, 212, 312, 412) einen Ausleger (114, 214, 314, 414) aufweist, der mit einem Ankopplungsbereich (115, 215, 315, 415) für das Kalibriergewicht (150) in der Ruheposition (RP) versehen ist.

12. Kraftmessvorrichtung (110, 210, 310, 410) mit einer Kalibriergewichtsanordnung (100, 200, 300, 400) nach Anspruch 11, **dadurch gekennzeichnet, dass**
der eingangsseitige Hebelarm (322, 422) des ersten Hebels (320, 420) eine Verlängerung (324, 424) aufweist, die sich in den an die dem feststehenden Bereich (311, 411) abgewandte Seite des Lastaufnahmebereichs (312, 412) angrenzenden Raum hinein erstreckt und dort mit einem Verlängerungsaufsatz (170, 470) mit dem Messaufnehmer (140) verbunden ist, wobei der Verlängerungsaufsatz (170, 470) eine Aufnahmevorrichtung (171) für das Kalibriergewicht (150) aufweist, und/oder dass
der Messaufnehmer (140) im an die dem feststehenden Bereich (311, 411) abgewandte Seite des Lastaufnahmebereichs (312, 412) angrenzenden Raum angeordnet ist.

13. Verfahren zum Betreiben einer Kalibriergewichtsanordnung (100, 200, 300, 400, 500) nach einem der Ansprüche 1 bis 8, wobei die Kraftmessvorrichtung (110, 210, 310, 410, 510)
einen Messaufnehmer (140, 540) zur Ausgabe eines dem aufgelegten Gewicht entsprechenden Messsignals aufweist mit
einem Permanentmagnetsystem (141) mit einem Luftspalt und mit
einer im Luftspalt beweglichen und im Betrieb der Kraftmessvorrichtung (110, 210, 310, 410, 510) von einem Kompensationsstrom durchflossenen Spule (142, 542), und
wobei der Transfermechanismus der Kalibriergewichtsanordnung (100, 200, 300, 400, 500) ferner einen mit einem beweglichen Teil des Messaufnehmers (140, 540) verbundenen Verlängerungsaufsatz (170, 470, 570, 870) mit einer Aufnahmevorrichtung (171, 571, 671, 871) für das Kalibriergewicht (140, 540) aufweist,
wobei das Verfahren mindestens die folgenden Schritte umfasst:
- Bereitstellen des Kalibriergewichts (150, 550, 750) in einer Ruheposition (RP);
- Ändern des Kompensationsstromes derart, dass die Aufnahmevorrichtung (171, 571, 671, 871) in Richtung der Ruheposition (RP) des Kalibriergewichts (150, 550, 750) bewegt wird, und daraufhin das Kalibriergewicht (150, 550, 750) kontaktiert;
- Ändern des Kompensationsstromes derart, dass die Aufnahmevorrichtung (171, 571, 671, 871) weiter bewegt wird, so dass das Kalibriergewicht (150, 550, 750) aus der Ruheposition (RP) in eine Kalibrierposition (KP) beziehungsweise von der Kalibrierposition (KP) in die Ruheposition (RP) überführt wird;
- Ändern des Kompensationsstromes derart, dass die Aufnahmevorrichtung (171, 571, 671, 871) nach Erreichen der Ruheposition (RP) des Kalibriergewichts (150, 550, 750) sich von diesem entfernt.

14. Verfahren nach Anspruch 13, wobei die Kraftmessvorrichtung (110, 210, 310, 410, 510)
einen Regler aufweist, welcher im Betrieb des gravimetrisches Messgeräts aufgrund eines Positionssensorsignals den Kompensationsstrom so regelt, dass die Spule (142, 542) durch die elektromagnetische Kraft zwischen der Spule (142, 542) und dem Permanentmagnetsystem (141) in eine zur Bestimmung einer aufgelegten Kraft vorgegebene Null-Lage (x₀) zurückgeführt wird, **dadurch gekennzeichnet, dass** das Verfahren ferner die folgenden Schritte umfasst:
- Aufzeichnen des Positionssensorsignals in Abhängigkeit mit dem angesteuerten Kompensationsstrom;
- Vergleichen der aufgezeichneten Abhängigkeit mit einem in einem Speicher abgelegten Referenzabhängigkeit und Ausgabe eines Transferalarms, der die Überschreitung eines Toleranzwertes zwischen der aufgezeichneten Abhängigkeit und dem Referenzabhängigkeit darstellt; und
- Bei Ausgabe eines Transferalarms, Anwenden eines Algorithmus, der mindestens eine der Bewegungsphase entgegengesetzte Änderung des Kompensationsstromes beinhaltet.

## Claims

1. A calibration weight assembly (100, 200, 300, 400, 500) for a gravimetric measurement device with a force measuring device (110, 210, 310, 410, 510) operating according to the principle of electromagnetic force compensation having
a fixed area (111, 211, 311, 411, 511),
a load receiving area (112, 212, 312, 412, 512), and
a sensing element (140, 540),
wherein the calibration weight assembly (100, 200, 300, 400, 500) comprises at least
one calibration weight (150, 550, 750), which may be coupled with the load receiving area (112, 212, 312, 412, 512), and
a transfer mechanism for transferring the at least one calibration weight (150, 550, 750) from a rest position (RP) to a calibration position (KP) and from the calibration position (KP) to the rest position (RP), respectively, during a motion phase,
wherein the calibration weight assembly (100, 200, 300, 400, 500) is configured such that by suitably control of the sensing element (140, 540), said sensing element, as a drive of the transfer mechanism, transfers the calibration weight (150, 550, 750) from the rest position (RP) to the calibration position (KP) and from the calibration position (KP) to the rest position (RP), respectively,
**characterised in that**
wherein the transfer mechanism has at least one polystable positioning element (561, 571), the first stable state of which defines the calibration position (KP) and the second stable state of which defines the rest position (RP) of the transfer mechanism, and
that the calibration position (KP) corresponds to the position to which the sensing element (140, 540) is returned in a controlled manner to determine an applied force, in particular corresponds to the zero position (x0).

2. The calibration weight assembly according to claim 1, **characterised in that** the centre of mass of the calibration weight (150, 550, 750) is arranged on the resultant force of the sensing element (140, 540), or on an axis (L), which is parallel to the resultant force of the sensing element (140, 540).

3. The calibration weight assembly according to claim 1 or 2, **characterised in that** the polystable positioning element (561, 761) further has a guiding piece (762) with a guide die (563, 663, 763) and a guide pin (564, 664, 764), wherein either the guiding piece (762) is mounted on the fixed area (111, 211, 311, 411, 511) and the guide pin (564, 664, 764) is mounted on the calibration weight (150, 550, 750), or the guide pin (564, 664, 764) is mounted on the fixed area (111, 211, 311, 411, 511), and the guiding piece (762) is mounted on the calibration weight (150, 550, 750).

4. The calibration weight assembly according to claim 3, **characterised in that** the shape and location of the guide die (563, 663, 763) is adjusted to the motion sequence of the calibration weight (150, 550, 750), such that the guide pin (564, 664, 764), due to the gravity vector (G), always passes through the guide die (563, 663, 763) in a clockwise or counterclockwise direction.

5. The calibration weight assembly according to any of claims 1 to 4, **characterised in that** the calibration weight (550, 750) is designed to be concentrical and rotatable about the resultant force of the sensing element (540), in particular has the form of a ring, or that the calibration weight (140) is designed to be in the shape of a cylinder or dumbbell.

6. The calibration weight assembly according to any of claims 1 to 5, **characterised in that**
the polystable positioning element (561, 761) has three pairs of a guiding piece (762) and a guide pin (564, 664, 764) each, wherein the pairs are concentrically equidistantly spaced apart from one another, or **in that**
the polystable positioning element has two pairs of a guiding piece and a guide pin each, wherein the pairs are each arranged on the front ends of a cylinder- or dumbbell-shaped calibration weight (140).

7. The calibration weight assembly according to claim 6, **characterised in that** the depth (T) of the guide die (763) increases in the direction of the gravity vector (G).

8. The calibration weight assembly according to any of claims 1 to 7, **characterised in that** the transfer mechanism further has an extension attachment (170, 470, 570, 870) connected to a moving part of the sensing element (140, 540) and having a holding device (171, 571, 671, 871) for the calibration weight (150, 550).

9. A force measurement device (510) with a calibration weight assembly (500) according to any of the preceding claims, wherein the fixed area (511) of the force measurement device (510) surrounds the load receiving area (512) and the calibration weight assembly (500) is arranged above or below the sensing element (540).

10. The force measurement device according to claim 8 or claim 9 if dependant on claim 8, **characterised in that** the extension attachment (570, 870) is mounted directly on the load receiving area (511).

11. The force measurement device (110, 210, 310, 410) with a calibration weight assembly (100, 200, 300, 400) according to any of claims 1 to 8,
wherein the load receiving area (112, 212, 312, 412) is connected to the fixed area (111, 211, 311, 411) in a movably guided manner by parallel links (113, 213, 313, 413), wherein the force measurement device (110, 210, 310, 410) further has
a first lever (120, 320, 420) with an entry-side lever arm (122, 322, 422) connected to the load receiving area (112, 212, 312, 412) in a force-transmitting manner and
an exit-side lever arm (123, 323, 423), which is connected to the sensing element (140) in a force-transmitting manner, either directly or indirectly via at least a second lever, and
wherein the fixed area (111, 211, 311, 411) or the load receiving area (112, 212, 312, 412) has a bracket (114, 214, 314, 414), which is provided with a coupling area (115, 215, 315, 415) for the calibration weight (150) in the rest position (RP).

12. The force measurement device (110, 210, 310, 410) with a calibration weight assembly (100, 200, 300, 400) according to claim 11, **characterised in that**
the entry-side lever arm (322, 422) of the first lever (320, 420) has an extension (324, 424) extending into the space adjacent to the side of the load receiving area (312, 412) facing away from the fixed area (311, 411), where it is connected to the sensing element (140) by means of an extension attachment (170, 470), wherein the extension attachment (170, 470) has a holding device (171) for the calibration weight (150), and/or that
the sensing element (140) is arranged in the space adjacent to the side of the load receiving area (312, 412) facing away from the fixed area (311, 411).

13. A method for operating a calibration weight assembly (100, 200, 300, 400, 500) according to any of claims 1 to 8, wherein the force measurement device (110, 210, 310, 410, 510) has
a sensing element (140, 540) for outputting a measurement signal corresponding to the applied weight having
a permanent magnet system (141) with an air gap and having
a coil (142, 152) that is movable within the air gap and has a compensation current flowing through it during operation of the force measurement device (110, 210, 310, 410, 510), and
wherein the transfer mechanism of the calibration weight assembly (100, 200, 300, 400, 500) further has an extension attachment (170, 470, 570, 870) connected to a moving part of the sensing element (140, 540) with a holding device (171, 571, 671, 871) for the calibration weight (140, 540),
the method comprising at least the following steps:
- providing the calibration weight (150, 550, 750) in a rest position (RP);
- changing the compensation current, such that the holding device (171, 571, 671, 871) is moved in the direction of the rest position (RP) of the calibration weight (150, 550, 750) and subsequently contacts the calibration weight (150, 550, 750);
- changing the compensation current such that the holding device (171, 571, 671, 871) is moved further, such that the calibration weight (150, 550, 750) is transferred from the rest position (RP) to a calibration position (KP) and from the calibration position (KP) to the rest position (RP), respectively;
- changing the compensation current, such that the holding device (171, 571, 671, 871), after reaching the rest position (RP) of the calibration weight (150, 550, 750), moves away from it.

14. The method according to claim 13, wherein the force measurement device (110, 210, 310, 410, 510) has a controller, which, during operation of the gravimetric measurement device, on the basis of a position sensor signal, controls the compensation current, such that the coil (142, 542), due to the electromagnetic force between the coil (142, 542) and the permanent magnet system (141), is returned to a zero position (x0) specified for determination of a force applied, **characterised in that** the method further comprises the following steps:
- recording the position sensor signal depending on the controlled compensation current;
- comparing the recorded dependency with a reference dependency stored in a storage and outputting a transfer alarm representing the exceedance of a tolerance value between the recorded dependency and the reference dependency; and
- upon output of a transfer alarm, applying an algorithm including at least one change in the compensation current opposite to the motion phase.

## Revendications

1. Dispositif d'étalonnage de poids (100, 200, 300, 400, 500) pour un appareil de mesure gravimétrique comportant un dispositif de mesure de force (110, 210, 310, 410, 510) fonctionnant selon le principe de compensation de force électromagnétique, présentant
une zone fixe (111, 211, 311, 411, 511),
une zone de réception de charge (112, 212, 312, 412, 512) et
un capteur de mesure (140, 540)
dans lequel le dispositif d'étalonnage de poids (100, 200, 300, 400, 500) comprend au moins
un poids de calibrage (150, 550, 750) pouvant être couplé à la zone de réception de charge (112, 212, 312, 412, 512) et
un mécanisme de transfert pour transférer l'au moins un poids d'étalonnage (150, 550, 750) pendant une phase de déplacement d'une position de repos (RP) à une position d'étalonnage (KP) ou de la position d'étalonnage (KP) à la position de repos (RP),
dans lequel le dispositif d'étalonnage de poids (100, 200, 300, 400, 500) est conçu de telle manière qu'en activant de manière appropriée le capteur (140, 540), celui-ci transfère, en tant qu'entraînement du mécanisme de transfert, le poids d'étalonnage (150, 550, 750) de la position de repos (RP) à la position d'étalonnage (KP) ou de la position d'étalonnage (KP) à la position de repos (RP),
**caractérisé en ce que**
le mécanisme de transfert présente au moins un élément de positionnement polystable (561, 571) dont le premier état stable définit la position d'étalonnage (KP) et dont le second état stable définit la position de repos (RP) du mécanisme de transfert, et
**en ce que** la position d'étalonnage (KP) correspond à la position dans laquelle le capteur (140, 540) est ramené de manière contrôlée pour déterminer une force appliquée, correspond en particulier à la position zéro (x0).

2. Dispositif d'étalonnage de poids selon la revendication 1, **caractérisé en ce que** le centre de masse du poids d'étalonnage (150, 550, 750) est disposé sur la force résultante du capteur (140, 540) ou sur un axe (L) parallèle à la force résultante du capteur (140, 540).

3. Dispositif d'étalonnage de poids selon la revendication 1 ou 2, **caractérisé en ce que** l'élément de positionnement polystable (561, 761) présente en outre une pièce de guidage (762) avec une matrice de guidage (563, 663, 763) et une goupille de guidage (564, 664, 764), dans lequel soit la pièce de guidage (762) est fixée sur la zone fixe (111, 211, 311, 411, 511) et la goupille de guidage (564, 664, 764) est fixée sur le poids d'étalonnage (150, 550, 750) soit la goupille de guidage (564, 664, 764) est fixée sur la zone fixe (111, 211, 311, 411, 511) et la pièce de guidage (762) est fixée sur le poids d'étalonnage (150, 550, 750).

4. Dispositif d'étalonnage de poids selon la revendication 3, **caractérisé en ce que** la forme et la position de la matrice de guidage (563, 663, 763) sont adaptées au mouvement du poids d'étalonnage (150, 550, 750) de sorte que la goupille de guidage (564, 664, 764) traverse toujours la matrice de guidage (563, 663, 763) dans le sens horaire ou dans le sens antihoraire sous l'effet du vecteur de gravité (G).

5. Dispositif d'étalonnage de poids selon l'une des revendications 1 à 4, **caractérisé en ce que** le poids d'étalonnage (550, 750) est réalisé de manière concentrique et rotative autour de la force résultante du capteur (540), en particulier présente la forme d'un anneau, ou **en ce que** le poids d'étalonnage (140) est cylindrique ou en forme d'haltère.

6. Dispositif d'étalonnage de poids selon l'une des revendications 1 à 5, **caractérisé en ce que**
l'élément de positionnement polystable (561, 761) présente trois paires constituées chacune d'une pièce de guidage (762) et d'une goupille de guidage (564, 664, 764), dans lequel les paires sont concentriquement espacées à la même distance les unes des autres, ou **en ce que**
l'élément de positionnement polystable présente deux paires constituées chacune d'une pièce de guidage et d'une goupille de guidage, dans lequel les paires sont respectivement disposées sur les surfaces frontales d'un poids d'étalonnage cylindrique ou en forme d'haltère (140).

7. Dispositif d'étalonnage de poids selon la revendication 6, **caractérisé en ce que** la profondeur (T) de la matrice de guidage (763) augmente dans la direction du vecteur de gravité (G).

8. Dispositif d'étalonnage de poids selon l'une des revendications 1 à 7, **caractérisé en ce que** le mécanisme de transfert présente également un accessoire d'extension (170, 470, 570, 870) relié à une partie mobile du capteur (140, 540) et doté d'un dispositif de réception (171, 571, 671, 871) pour le poids d'étalonnage (150, 550).

9. Dispositif de mesure de force (510) comportant un dispositif d'étalonnage de poids (500) selon l'une des revendications précédentes, dans lequel la zone fixe (511) du dispositif de mesure de force (510) entoure la zone de réception de charge (512) et le dispositif d'étalonnage de poids (500) est disposé au-dessus ou au-dessous du capteur (540).

10. Dispositif de mesure de force selon la revendication 8 ou selon la revendication 9 lorsqu'elle dépend de la revendication 8, **caractérisé en ce que** l'accessoire d'extension (570, 870) est placé directement sur la zone de réception de charge (511).

11. Dispositif de mesure de force (110, 210, 310, 410) comportant un dispositif d'étalonnage de poids (100, 200, 300, 400) selon l'une des revendications 1 à 8,
dans lequel la zone de réception de charge (112, 212, 312, 412) est reliée à la zone fixe (111, 211, 311, 411) par des bras parallèles (113, 213, 313, 413) de manière à être guidée de façon mobile, dans lequel le dispositif de mesure de force (110, 210, 310, 410) présente
en outre un premier levier (120, 320, 420) avec
un bras de levier côté entrée (122, 322, 422) relié à la zone de réception de charge (112, 212, 312, 412) de manière à transmettre la force, et
un bras de levier (123, 323, 423) côté sortie, qui est relié au capteur (140) directement ou indirectement par l'intermédiaire d'au moins un second levier de manière à transmettre la force, et
dans lequel la zone fixe (111, 211, 311, 411) ou la zone de réception de charge (112, 212, 312, 412) présente une flèche (114, 214, 314, 414) qui est dotée d'une zone de couplage (115, 215, 315, 415) pour le poids d'étalonnage (150) dans la position de repos (RP).

12. Dispositif de mesure de force (110, 210, 310, 410) comportant un dispositif d'étalonnage de poids (100, 200, 300, 400) selon la revendication 11, **caractérisé en ce que**
le bras de levier côté entrée (322, 422) du premier levier (320, 420) présente une extension (324, 424) qui s'étend dans l'espace adjacent au côté de la zone de réception de charge (312, 412) opposé à la zone fixe (311, 411) et y est reliée au capteur (140) par un accessoire d'extension (170, 470), dans lequel l'accessoire d'extension (170, 470) présente un dispositif de réception (171) pour le poids d'étalonnage (150), et/ou **en ce que**
le capteur (140) est disposé dans l'espace adjacent au côté de la zone de réception de charge (312, 412) opposé à la zone fixe (311, 411).

13. Procédé de fonctionnement d'un dispositif d'étalonnage de poids (100, 200, 300, 400, 500) selon l'une des revendications 1 à 8, dans lequel le dispositif de mesure de force (110, 210, 310, 410, 510) présente
un capteur (140, 540) pour émettre un signal de mesure correspondant au poids placé dessus avec
un système d'aimants permanents (141) avec un entrefer et avec
une bobine (142, 542) mobile dans l'entrefer et traversée par un courant de compensation pendant le fonctionnement du dispositif de mesure de force (110, 210, 310, 410, 510), et
dans lequel le mécanisme de transfert du dispositif d'étalonnage de poids (100, 200, 300, 400, 500) présente en outre un accessoire d'extension (170, 470, 570, 870) relié à une partie mobile du capteur (140, 540) et doté d'un dispositif de réception (171, 571, 671, 871) du poids d'étalonnage (140, 540),
dans lequel le procédé comprend au moins les étapes suivantes :
- la fourniture du poids d'étalonnage (150, 550, 750) dans une position de repos (RP) ;
- la modification du courant de compensation de sorte que le dispositif de réception (171, 571, 671, 871) est déplacé en direction de la position de repos (RP) du poids d'étalonnage (150, 550, 750) puis entre en contact avec le poids d'étalonnage (150, 550, 750) ;
- la modification du courant de compensation de sorte que le dispositif de réception (171, 571, 671, 871) est davantage déplacé de sorte que le poids d'étalonnage (150, 550, 750) passe de la position de repos (RP) à une position d'étalonnage (KP) ou de la position d'étalonnage (KP) à la position de repos (RP) ;
- la modification du courant de compensation de sorte que le dispositif de réception (171, 571, 671, 871) s'éloigne du poids d'étalonnage (150, 550, 750) après que la position de repos (RP) de ce dernier a été atteinte.

14. Procédé selon la revendication 13, dans lequel le dispositif de mesure de force (110, 210, 310, 410, 510) présente un régulateur qui, pendant le fonctionnement du dispositif de mesure gravimétrique, régule le courant de compensation sur la base d'un signal de capteur de position de sorte que la bobine (142, 542) est ramenée par la force électromagnétique entre la bobine (142, 542) et le système d'aimants permanents (141) à une position zéro (x0) spécifiée pour déterminer une force appliquée, **caractérisé en ce que** le procédé comprend en outre les étapes suivantes :
- l'enregistrement du signal du capteur de position en fonction du courant de compensation régulé ;
- la comparaison de la dépendance enregistrée avec une dépendance de référence stockée dans une mémoire et l'émission d'une alarme de transfert qui représente le dépassement d'une valeur de tolérance entre la dépendance enregistrée et la dépendance de référence ; et
- lorsqu'une alarme de transfert est émise, l'application d'un algorithme qui inclut au moins une modification du courant de compensation opposée à la phase de déplacement.
